# FASCICULE DE BREVET EUROPEEN

(11) **EP 4 383 738 B1**
(45) Date de publication et mention de la délivrance du brevet: **16.04.2025**
(21) Numéro de dépôt: 23210998.3
(22) Date de dépôt: 20.11.2023
(51) Int. Cl.: H04N 23/51, H04N 21/41, H04N 23/57

(54) **BOITIER DECODEUR A CAPTEUR OPTIQUE INTEGRE ET SYSTEME COMPRENANT UN TEL BOITIER DECODEUR**
SET-TOP-BOX MIT INTEGRIERTEM OPTISCHEN SENSOR UND SYSTEM MIT EINER SOLCHEN SET-TOP BOX
DECODER HOUSING WITH INTEGRATED OPTICAL SENSOR AND SYSTEM COMPRISING SUCH A DECODER HOUSING

(30) Priorité: 08.12.2022 FR 2213021
(43) Date de publication de la demande: 12.06.2024
(73) Titulaire: Sagemcom Broadband SAS, 92270 Bois-Colombes (FR)
(72) Inventeur: CHUSSEAU, Hugo, 92270 BOIS-COLOMBES (FR); NEDELCU, Radu, 92270 BOIS-COLOMBES (FR); DELPLACE, Stéphane, 92270 BOIS-COLOMBES (FR)
(74) Mandataire: Cabinet Boettcher

(56) Documents cités:
- EP-A1- 1 482 733
- EP-A1- 2 533 516
- EP-A1- 3 328 059
- CN-U- 206 350 105
- US-A1- 2007 172 230
- US-A1- 2019 012 544

## Description

L'invention concerne un boitier décodeur comprenant un capteur optique.

L'invention comporte un système équipé d'un tel boitier.

### ARRIERE PLAN DE L'INVENTION

Les boitiers décodeurs audio-vidéo (en anglais, Set-Top Box) permettent classiquement de transmettre un flux audio-vidéo, produit par une source, à un ou plusieurs équipements de restitution audio-vidéo, tel qu'une télévision. La source peut être de type télédiffusion (en anglais, broadcasting, comme par exemple le satellite, la TNT ou encore le câble) ou encore de type OTT (en anglais, Over The Top, comme par exemple un serveur connecté à Internet).

Depuis peu, il est également proposé de passer par le boitier décodeur pour réaliser des visioconférences. A cet effet, le boitier décodeur doit être associé à une ou plusieurs caméras.

Une première solution consiste à associer au boitier décodeur une ou des caméras externes à poser au-dessus d'un téléviseur et branchées au boitier décodeur par un câble USB.

Toutefois le recours à une ou plusieurs caméras externe est peu pratique puisqu'il nécessite une fixation au-dessus de l'écran du téléviseur ainsi que le passage de câbles additionnels.

Par ailleurs ce type de caméra externe doit se poser sur le téléviseur qui est lui-même soumis à de fortes contraintes thermiques (le haut des téléviseurs étant généralement chaud). Ceci est problématique puisque les caméras employées ne supportent pas de fortes hausses de température.

Il a alors été proposé, selon une deuxième solution, de fixer une caméra orientable directement sur le boitier décodeur.

De plus ce type de mécanisme rend la caméra très perceptible par l'utilisateur. Or les utilisateurs préfèrent généralement que la caméra reste discrète pour ne pas générer de sensation désagréable d'être observé.

Néanmoins ceci augmente grandement le coût de fabrication du boitier décodeur, notamment si le mécanisme d'orientation de la caméra doit pouvoir résister aux vibrations des hautparleurs éventuellement intégrés dans le boitier décodeur.

Le document CN 206350105U divulgue un boitier décodeur de forme cylindrique intégrant une caméra montée sur un support mécanique pour ajuster l'axe optique de la caméra. Le document US 2019/012544 A1 divulgue un téléphone portable intégrant une caméra de face ayant un axe optique fixe qui est incliné par rapport au plan horizontal de l'appareil. Le document EP 2 533 516 A1 divulgue un téléviseur intégrant dans la partie basse une caméra ayant un axe optique incliné vers le haut par rapport au plan horizontal.

### OBJET DE L'INVENTION

Un but de l'invention est donc de proposer un boitier décodeur intégrant un capteur optique de sorte que le capteur optique soit mieux protégé de l'environnement extérieur.

### RESUME DE L'INVENTION

En vue de la réalisation de cet objet, on propose un boitier décodeur comportant un caisson comprenant :
- Une première face principale,
- Une deuxième face principale,
- Au moins un flanc latéral reliant la première face principale à la deuxième face principale.

Selon l'invention le boitier comporte au moins un capteur optique dont le champ de vision est centré autour d'un axe donné, ledit axe étant incliné vis-à-vis d'un plan donné horizontal lorsque le boitier est posé sur une base, le flanc étant pourvu d'au moins une ouverture traversant le flanc de sorte à déboucher à une première extrémité hors du caisson et à une deuxième extrémité à l'intérieur du caisson, le capteur optique étant agencé dans le caisson de sorte que ledit axe donné traverse le flanc via ladite ouverture.

Le capteur optique se retrouve ainsi agencé directement dans le caisson du boitier ce qui permet de bien le protéger de l'environnement extérieur. En outre, du fait que le capteur optique soit agencé à l'intérieur du caisson, il s'avère moins visible pour un utilisateur ce qui est très recherché.

De façon avantageuse, grâce à l'inclinaison du capteur optique, il est possible de positionner des images pertinentes d'un utilisateur même si le capteur optique n'est pas au niveau du visage de l'utilisateur. Par « pertinente », on entend que les images permettent de visualiser au moins le visage de l'utilisateur dans le champ de vision du capteur optique, et de préférence de visualiser également le haut du corps de l'utilisateur dans le même champ de vision.

L'invention permet dès lors de pouvoir assurer un appel par visioconférence.

Optionnellement, l'ouverture s'étend longitudinalement le long d'une direction donnée, le capteur optique étant agencé de sorte que l'axe de vision soit parallèle à ladite direction donnée.

Optionnellement, le capteur optique est agencé de sorte que l'axe de vision soit perpendiculaire au flanc latéral. Optionnellement, le capteur optique est agencé de sorte que le plan donné est parallèle à au moins l'une des faces principales du caisson.

Optionnellement, le capteur optique est agencé de sorte que son axe de vision soit incliné vers le haut.

Optionnellement, le capteur optique est agencé de sorte que son axe de vision forme un angle donné avec un axe du plan selon lequel s'étend l'une des faces principales du caisson, ledit angle étant compris entre 3 et 13 degrés.

Le boitier comprend un support portant le capteur optique.

Le support est une carte à circuits imprimés.

Optionnellement, le capteur optique est agencé sur le support de sorte que son axe de vision soit perpendiculaire à une face principale du support.

Optionnellement, le support est monté sur le caisson de manière inclinée vis-à-vis du flanc latéral.

Optionnellement, le boitier comprend au moins une protection.

Optionnellement, la protection recouvre une extrémité de l'ouverture débouchant à l'extérieur du caisson.

Optionnellement, la protection est agencée de sorte à former un plan continu avec le flanc latéral.

Optionnellement, la protection est agencée entre une face interne du caisson et le capteur optique.

Optionnellement, l'ouverture est conformée au moins en partie en tronc de cône.

Le caisson est au moins en deux parties.

Le capteur optique est agencé en partie haute du boitier.

L'invention concerne un système comprenant un boitier tel que précité et des moyens d'ajustement des images acquises par le capteur optique.

D'autres caractéristiques et avantages de l'invention ressortiront à la lecture de la description qui suit d'un mode de réalisation particulier non limitatif de l'invention.

### BREVE DESCRIPTION DES DESSINS

La description de l'invention fait référence aux dessins annexés, parmi lesquels :

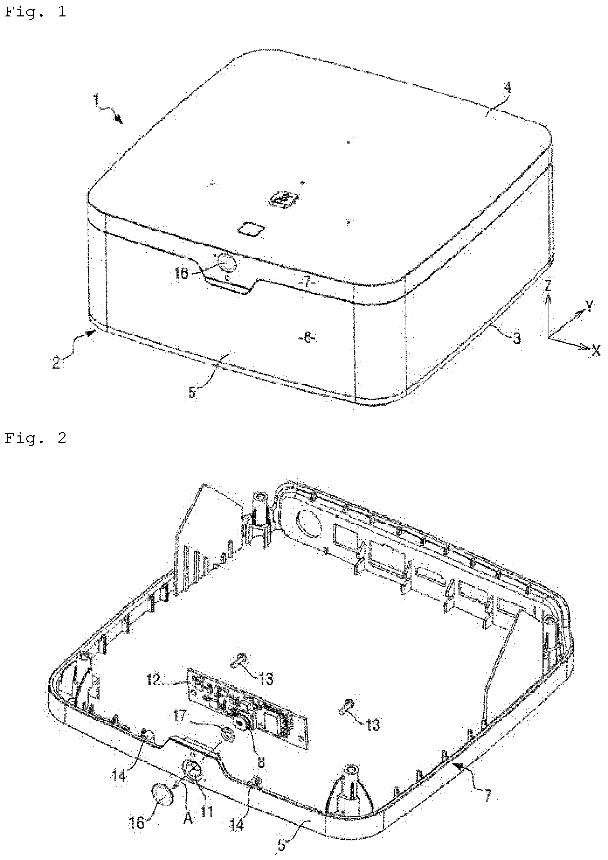

[Fig. 1] la figure 1 est une vue en perspective d'un boitier décodeur selon un mode de réalisation particulier de l'invention,
[Fig. 2] la figure 2 est une vue en perspective de dessous d'une partie du boitier illustré à la figure 1,

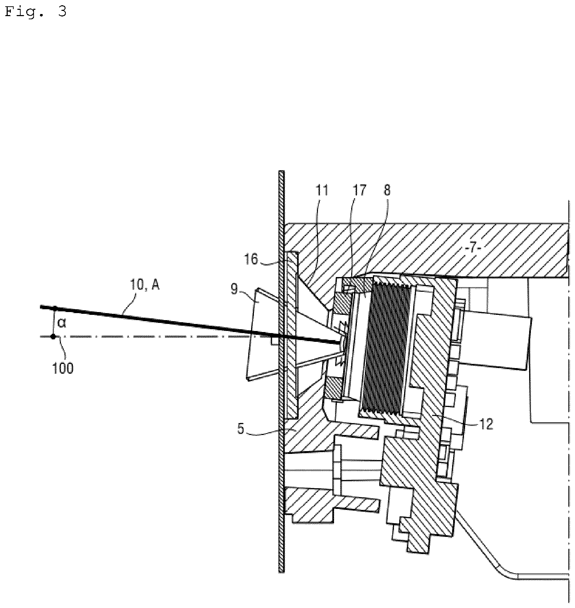

[Fig. 3] la figure 3 est une vue en coupe verticale du boitier illustré à la figure 1, la coupe passant par un axe donné associé au capteur optique dudit boitier,

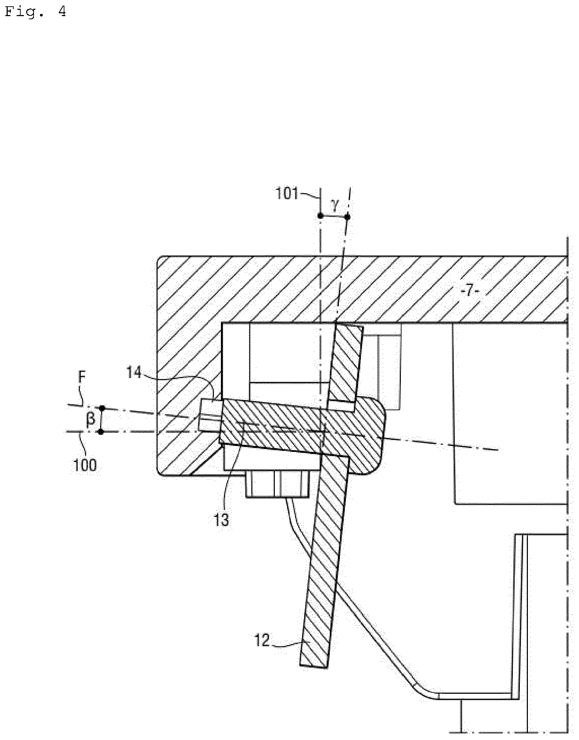

[Fig. 4] la figure 4 est une vue en coupe verticale du boitier illustré à la figure 1, la coupe passant par au moins un moyen de fixation d'un capteur optique dudit boitier à un capot dudit boitier,
[Fig. 5] la figure 5 est une vue de face d'une partie du boitier illustré à la figure 1, sans protection du capteur optique dudit boitier,
[Fig. 6] la figure 6 est une vue de face d'une partie du boitier illustré à la figure 1, avec protection du capteur optique dudit boitier,
[Fig. 7] la figure 7 illustre schématiquement une image acquise par le capteur optique du boitier, avant et après traitement de ladite image.

### DESCRIPTION DETAILLEE DE L'INVENTION

En référence aux différentes figures, il est décrit un boitier décodeur 1 selon un mode de réalisation particulier de l'invention. Le boitier décodeur 1 est par exemple un boitier décodeur audio-vidéo (en anglais, Set-Top Box).

Le boitier décodeur 1 comporte un caisson 2.

Le caisson 2 comporte une première face principale - appelée face principale inférieure 3 par la suite - soit la face du caisson 2 destinée à venir reposer contre une base et préférentiellement un meuble tel que par exemple un meuble bas et par exemple un meuble de téléviseur. La face principale inférieure 3 est ici plane. La face principale inférieure 3 est destinée à s'étendre dans un plan horizontal lorsque la face principale inférieure 3 repose contre une surface horizontale correspondante de la base.

Par la suite, on se place dans la situation où le boitier décodeur 1 repose sur ladite surface plane horizontale par l'intermédiaire de sa face principale inférieure 3.

Le caisson 2 comporte par ailleurs une deuxième face principale appelée face principale supérieure 4 par la suite. Cette face principale supérieure 4 est agencée à l'opposé de la face principale inférieure 3.

Les deux faces principales 3, 4 présentent ici extérieurement une même périphérie (en forme et en dimensions). Par exemple les deux faces principales 3, 4 sont conformées en carré ou en rectangle.

Le caisson 2 comporte par ailleurs au moins un flanc latéral reliant la face principale supérieure 4 à la face principale inférieure 3.

Dans le cas présent, le caisson 2 comporte quatre flancs latéraux 5 (dont un seul est référencé ici) reliant les deux faces principales 3, 4 ensemble.

De préférence, la frontière entre deux flancs 5 successifs est formée par un congé. De même les bords de la face principale supérieure 4 sont arrondis. De même les bords de la face principale inférieure3 sont arrondis.

On évite ainsi la présence d'arête ou d'angle pointu sur le caisson 2.

Dans le cas présent, les deux faces principales 3, 4 s'étendent dans deux plans différents mais parallèles entre eux et à un plan commun défini par un premier axe X et un deuxième axe Y perpendiculaires entre eux. Les différents flancs 5 s'étendent également parallèlement deux à deux. Deux flancs 5 s'étendent ainsi parallèlement entre eux et à un plan commun défini par le premier axe X et un troisième axe Z, perpendiculaire au premier axe X et au troisième axe Y. Deux flancs s'étendent parallèlement entre eux et à un plan commun défini par le deuxième axe Y et le troisième axe Z.

Les flancs 5 s'étendent donc orthogonalement aux faces principales 3, 4.

De préférence, la hauteur des flancs 5 (suivant le troisième axe Z) est inférieure à la largeur ou la longueur (suivant les axes Y et X) des deux faces principales 3, 4.

Le caisson 2 présente ainsi globalement une forme parallélépipédique.

Le caisson 2 est en au moins deux parties. Par exemple le caisson 2 comporte une embase 6 et un capot 7 formant conjointement le caisson 2.

Préférentiellement, l'embase 6 et le capot 7 sont aptes à être emboités ou encliqueter l'un dans l'autre. De préférence, une fois l'embase 6 et le capot 7 solidarisés l'un à l'autre, on vient les fixer l'un à l'autre par des premiers moyens de fixation comprenant par exemple des vis. Typiquement, le capot 7 forme au moins la face principale supérieure 4 et une portion supérieure des différents flancs latéraux. L'embase 6 forme la face principale inférieure 3 et la portion complémentaire des flancs latéraux. De préférence le capot 7 présente une hauteur (selon le troisième axe Z) plus faible que celui de l'embase 6.

Par ailleurs, le boitier décodeur 1 comporte un capteur optique 8.

De façon connue en soi, le capteur optique 8 présente un champ de vision 9 (i.e. la zone de vision que le capteur optique 8 peut capturer lors d'une prise d'image) qui est centré autour d'un axe de vision 10 du capteur optique 8. Typiquement le champ de vision 9 présente une section transversale (de plan de section de normale l'axe de vision 10) qui est carré ou rectangulaire, la section s'évasant au fur et à mesure que l'on s'éloigne du capteur optique 8. Le champ de vision du capteur optique 8 est donc ici au moins en partie un tronc de pyramide, l'axe de vision 10 formant la hauteur de ladite pyramide. La pyramide est ici de base carré ou rectangulaire.

Le capteur optique 8 est agencé dans le boitier décodeur 1 de sorte à être fixe par rapport au caisson 2.

De la sorte, ceci limite l'encombrement du capteur optique 8.

En outre, le capteur optique 8 est ainsi moins sensible aux vibrations ce qui hautement préférable dans le cas, optionnel, où le boitier décodeur 1 est muni de hautparleurs.

Le capteur optique 8 est par exemple une caméra et par exemple une caméra comprenant un capteur électronique (par exemple de type CMOS ou CCD) et au moins une lentille optique.

Le capteur optique 8 est entièrement agencé à l'intérieur du caisson 2.

Typiquement, au moins une ouverture 11 est ménagée dans l'un des flancs latéraux 5 du boitier décodeur 1.

L'ouverture 11 s'étend donc en façade du boitier décodeur 1.

L'ouverture 11 s'étend à travers le flanc latéral 5 de manière rectiligne selon une direction A.

Dans le cas présent, l'ouverture 11 est ménagée dans le capot 7.

L'ouverture 11 est traversante de sorte à déboucher à une première extrémité à l'intérieur du caisson 2 et à une deuxième extrémité à l'extérieur du caisson 2.

L'ouverture 11 présente une section transversale (selon un plan de section de normale la direction A) qui est ici circulaire.

L'ouverture 11 présente une section transversale qui s'agrandit en direction de l'extérieur du caisson 2.

Ainsi l'ouverture 11 est conformée en tronc de cône sur au moins un tronçon de l'ouverture 11.

Le capteur optique 8 est par ailleurs agencé de sorte que son axe de vision 10 s'étende à travers le flanc latéral 5 depuis l'intérieur du caisson 2 jusqu'à l'extérieur du caisson 2 par l'intermédiaire de ladite ouverture 11. L'axe de vision 10 est bien entendu un axe imaginaire de sorte qu'il s'étende donc virtuellement à travers l'ouverture 11. Ainsi, le fait que le capteur optique 8 soit reculé à l'intérieur du caisson 2 permet de bien protéger le capteur optique 8. En particulier une lentille dudit capteur optique 8 se trouve ainsi bien protégée de lumières incidentes qui limiteraient la qualité des images acquises par le capteur optique 8.

Par ailleurs, le capteur optique 8 est agencé de sorte que son axe de vision 10 soit incliné (i.e. ni parallèle ni orthogonale) vis-à-vis d'un plan donné. Le plan donné est par exemple un plan parallèle à la face principale supérieure 4 et/ou à la face principale inférieure 3.

Ainsi, ledit plan est horizontal lorsque la face principale inférieure 3 repose sur la base.

Dès lors l'axe de vision 10 est incliné vis-à-vis de l'horizontal dans le cas présent.

L'inclinaison du champ de vision 9 du capteur optique 8 vis-à-vis de l'horizontal permet avantageusement de pouvoir acquérir des images pertinentes.

L'axe de vision 9 est ainsi également incliné (et non orthogonal) au flanc latéral 5 dans lequel est ménagée l'ouverture 11.

Optionnellement, l'axe de vision 9 est incliné vers le haut vis-à-vis du plan dans lequel s'étend la face principale inférieure 3.

Ceci permet de pouvoir acquérir des images pertinentes de l'utilisateur même si le boitier décodeur 1 est agencé sur un meuble bas et par exemple un meuble bas compris entre 40 et 80 centimètres de hauteur par rapport au sol.

Par exemple, le capteur optique 8 est agencé de sorte que son axe de vision 10 forme un angle α avec un axe horizontal 100 (qui est alors normal au flanc latéral 5 traversé par l'ouverture 11) qui soit compris entre 3 et 13 degrés et par exemple entre 4 et 8 degrés et par exemple entre 5 et 7 degrés et soit par exemple de 6 degrés.

De façon avantageuse, en plaçant le capteur optique 8 dans la partie supérieure du boitier décodeur 1, on limite la valeur de l'angle α à appliquer pour compenser une position basse du boitier décodeur 1 lorsque la base est un meuble bas tel qu'un meuble de télévision.

De préférence, la direction A selon lequel s'étend axialement l'ouverture 11 est parallèle à l'axe de vision 10 du capteur optique. De préférence la direction A est confondue avec l'axe de vision 10 du capteur optique 8.

Ainsi l'ouverture 11 et le champ de vision 9 du capteur optique 8 s'étendent co-axialement.

Ceci permet à l'ouverture 11 d'éviter d'interférer avec le champ de vision 9.

On comprend donc la direction A forme également l'angle α avec l'axe horizontal 100.

On comprend donc que la direction A est inclinée vis-à-vis de l'horizontal dans le cas présent.

De préférence afin de limiter encore davantage les interférences entre le champ de vision 9 et l'ouverture 11, l'ouverture 11 est conformée pour présenter une section transversale plus large que la section transversale correspondante du champ de vision 9 (pour un même plan de coupe de normale la direction A) et ce pour au moins une partie de tronçon de l'ouverture 11 (selon la direction A) et de préférence sur toute la longueur (selon la direction A) de l'ouverture 11.

La marge sur les dimensions de l'ouverture 11 vis-à-vis de celles du champ de vision 9 limite les effets de vignettage (interférence entre le caisson 2 et le champ de vision 9) et/ou permet d'absorber les potentiels défauts de coaxialité entre la direction A et l'axe de vision 10 liés aux tolérances de fabrication et d'assemblage.

Optionnellement, pour l'angle maximal de champ de vision 9 (i.e. l'angle de champ de vision 9 qui est défini ici par une première arête de la pyramide et une deuxième arête de la pyramide non successive à la première), on choisit une valeur de dégagement de l'ouverture 11 (i.e. la valeur du demi-angle au somment du cône définissant au moins en partie l'ouverture) majorée de 5 à 20% et par exemple de 13 à 17%. Par exemple l'angle maximal de champ de vision 9 est compris entre 30 et 45 degrés et par exemple entre 35 et 40 degrés. Par exemple la valeur de dégagement de l'ouverture 11 est comprise entre 40 et 50 degrés et est par exemple de 45 degrés.

Le boitier décodeur 1 comporte un support 12 portant le capteur optique. Le capteur optique est ainsi fixé au support. Par exemple le capteur optique est soudé au support.

Le support 12 est une carte à circuits imprimés. Le support 12 est ainsi conformé en une plaque. Son épaisseur est donc bien moins importante que ses deux autres dimensions. Le support 12 présente ainsi deux faces principales. Lesdites faces sont planes. Lesdites faces s'étendent parallèlement entre elles.

Le support 12 est lui-même fixé au caisson 2 et agencé à l'intérieur du caisson 2. Le support 12 est par exemple fixé au capot 7. De préférence, le support 12 est fixé au capot 7 au niveau de la face principale supérieure 4 et/ou du flanc latéral 5 dans lequel l'ouverture 11 est ménagée.

A cet effet, le boitier décodeur 1 comporte des deuxièmes moyens de fixation du support 12 au caisson 2. Par exemple les deuxièmes moyens de fixation comportent au moins une vis 13 et le capot 7 au moins un fût de vissage 14 correspondant dans lequel la vis 13 est logée. De préférence, les deuxièmes moyens de fixation comportent au moins deux vis 13 venant chacune se visser en service dans l'un des au moins deux fûts de vissage 14 correspondants du capot 7.

Par exemple le support 12 comporte au moins un trou le traversant de sorte à déboucher à une première extrémité sur la première face principale du support 12 et à une deuxième extrémité sur la deuxième face principale du support 12, le trou s'étendant ainsi orthogonalement auxdites faces. De préférence, le support 12 comporte un tel trou à une première extrémité longitudinale et un tel autre trou à l'autre de ses deux extrémités longitudinales.

Ainsi il suffit d'agencer une première vis 13 à travers l'un des trous du support 12 puis dans le fût 14 correspondant du capot 7 et la deuxième vis 13 à travers l'autre trou du support dans l'autre fût 14, pour fixer le support 12 au capot 7.

Comme le capteur optique 8 est ainsi entièrement agencé dans le caisson 2, le support 12 étant fixé au capot 7, on évite d'avoir à modifier l'épaisseur du flanc latéral 5 en regard pour agencer le capteur optique 8 à l'intérieur d'un potentiel logement dudit flanc latéral 5. Ceci entrainerait en effet une dégradation de l'aspect visuel externe dudit flanc latéral 5 avec notamment l'apparition de retassures et d'irisations ce qui serait préjudiciable. Ceci fragiliserait en outre ledit flanc latéral 5.

Au moins l'un des fûts 14 s'étend rectilignement et longitudinalement selon une direction F. Par ailleurs au moins l'un des fûts 14 est agencé de sorte que lorsque le support 12 est fixé au capot 7 via les fûts 14, la direction F se trouve orthogonale au plan dans lequel s'étend la première face principale du support 12.

Selon un mode de réalisation particulier, le support 12 est agencé de manière inclinée vis-à-vis du flanc latéral 5 portant l'ouverture 11. Typiquement au moins l'un des fûts 14 est agencé de sorte que sa direction F soit inclinée d'un angle β avec l'axe horizontal 100.

La première face principale du support 12 (celle portant le capteur optique 8) se retrouve donc inclinée de manière correspondante d'un angle γ vis-à-vis d'un plan vertical 101 (parallèle aux axes X et Z), l'angle γ présentant une valeur égale à celle de l'angle β.

Par ailleurs le capteur optique 8 est agencé sur la première face principale du support 12 de sorte que son axe de vision 10 s'étende orthogonalement à ladite face.

De la sorte, le capteur optique 8 est bien incliné vis-à-vis de l'horizontal. On comprend alors que dans ce cas l'angle β est égal à l'angle α.

Préférentiellement, le boitier décodeur 2 comporte au moins une protection 16 du capteur optique 8.

La protection 16 est ici agencée de sorte à boucher la deuxième extrémité de l'ouverture 11, celle débouchant à l'extérieur du caisson 2. La protection 16 est donc agencée côté surface externe du flanc latéral 5 correspondant.

La protection 16 doit être bien entendu suffisamment transparente pour pouvoir permettre au capteur optique 8 d'acquérir des images. La protection 16 est par exemple une vitre. Optionnellement un traitement est appliqué sur au moins une partie d'au moins l'une de ses faces - par exemple la face externe de la protection 16 soit celle tournée vers l'extérieur du caisson 2. Le traitement est par exemple un traitement anti-reflet.

La vitre protège ainsi le boitier décodeur 1 et notamment le capteur optique 8 par exemple de poussières et/ou de traces.

Les éventuelles traces et/ou poussières qui seraient amenées à se déposer sur la protection 16, du fait de leur éloignement par rapport au capteur optique 8, seront moins gênantes pour la qualité d'image que si elles étaient situées plus proches du capteur optique 8 (voir à la surface de celui-ci).

De préférence, la protection 16 est agencée de sorte à ne pas dépasser du caisson 2 et notamment de la surface externe du flanc latéral 5. De préférence, la protection 16 est agencée de sorte à former un plan continu avec la surface externe dudit flanc 5.

Ceci facilite le nettoyage du boitier décodeur 1 et/ou évite une potentielle accumulation de poussières ce qui pourrait être néfaste aux performances optiques du capteur optique 8 (comme par exemple une baisse de contraste).

On comprend donc que pour assurer une continuité des surfaces, la protection 16 s'étend dans le même plan que la surface externe du flanc latéral 5 associé. Ainsi la protection 16 s'étend de manière inclinée vis-à-vis de l'axe de vision 10 du capteur optique 8. En service, la protection 16 s'étend ainsi à la verticale.

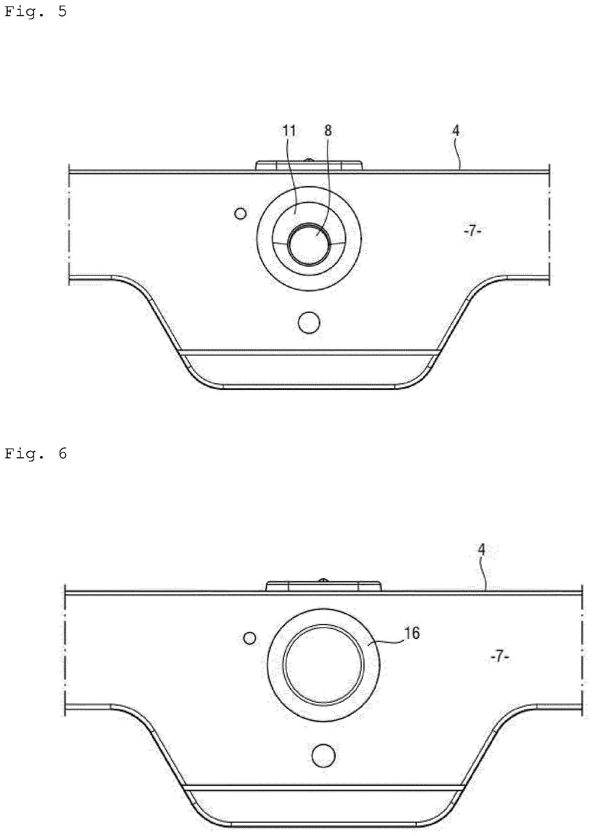

Dès lors, comme plus visible aux figures 5 et 6, la protection 16 évite que l'utilisateur ne puisse visualiser la deuxième extrémité de l'ouverture 11 débouchant sur la surface externe du flanc latéral 5 formant une intersection elliptique avec ladite surface externe (et non circulaire) de par l'inclinaison de l'ouverture 11 vis-à-vis dudit flanc latéral 5.

De préférence, le boitier décodeur 1 comporte au moins une deuxième protection 17 du capteur optique 8.

La deuxième protection 17 est ici agencée côte surface interne du flanc latéral 5 portant l'ouverture 11. De préférence, la deuxième protection 17 est agencée entre ladite surface interne et le capteur optique 8 de sorte à être pincée entre ladite surface interne et une surface d'extrémité en regard du capteur optique 8.

On évite ainsi que le capteur optique 8 ne vienne directement appuyer contre le caisson 2 ce qui pourrait l'endommager et/ou on évite ainsi que des poussières et/ou des traces ne viennent se déposer sur le capteur optique 8 notamment sa lentille.

La deuxième protection 17 est par exemple en mousse ou tout autre matériau élastiquement déformable.

La deuxième protection 17 est transparente et/ou trouée pour évidemment ne pas interférer le champ de vision du capteur optique 8.

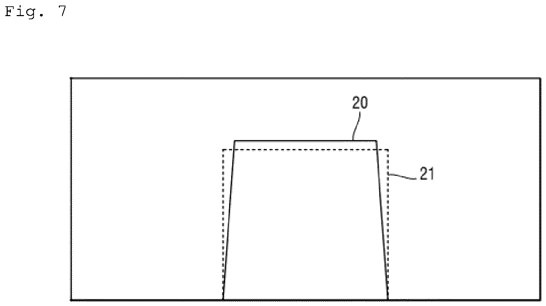

Sur un autre aspect, la figure 7 illustre le problème de la déformation dû à l'inclinaison du capteur optique 8 : en traits pleins 20 est représentée l'image captée d'un objet normalement rectangulaire. On peut donc constater que du fait de l'inclinaison du capteur optique 8, l'objet n'est plus complètement rectangulaire sur l'image acquise en étant légèrement réduit selon l'axe vertical. Il convient de noter que l'effet est volontairement accentué sur la figure 7 pour rendre l'illustration plus compréhensible, la différence étant dans les faits bien moins importante.

Optionnellement, pour obvier à cet inconvénient, le boitier décodeur 1 comporte des moyens d'ajustement des images acquises par le capteur optique 8.

Par exemple les moyens d'ajustement effectuent un traitement d'images afin de compenser les déformations géométriques issues de l'inclinaison du capteur optique 8. Sur la figure 7, en traits pointillés est représentée l'image corrigée de l'objet normalement rectangulaire.

Les moyens de traitement font par exemple partie du processeur central du boitier décodeur 1 (en anglais Central Processing Unit) ou bien du processeur graphique du boitier décodeur 1 (en anglais Graphic Processing Unit) ou bien encore du processeur neuronal du boitier décodeur (en anglais Neural Processing Unit).

Bien entendu, l'invention n'est pas limitée au mode de réalisation décrit mais englobe toute variante entrant dans le champ de l'invention telle que définie par les revendications.

Ainsi, le caisson pourra avoir une autre forme que celle indiquée.

Bien qu'ici les deux faces principales du caisson soient identiques, les deux faces principales du caisson pourront être différentes en forme et/ou en dimensions. Par exemple la face principale supérieure pourra être de même forme que la face principale inférieure mais de dimensions réduites.

Bien qu'ici le caisson ne comporte pas d'angle pointu, le caisson pourra comporter des coins ou des angles pointus. Par exemple deux flancs latéraux successifs pourront se rejoindre via une arête (donc un angle pointu) et/ou au moins deux bords successifs de la face principale supérieure et/ou de la face principale inférieure pourront se rejoindre via un bord pointu.

Bien qu'ici les deux faces principales du caisson soient parallèles entre elles, les deux faces pourront ne pas être parallèles entre elle. De même les flancs latéraux pourront ne pas être parallèles deux à deux.

Ainsi au moins un flanc latéral pourra ne pas s'étendre orthogonalement à une ou les deux faces principales.

Le caisson pourra être conformé différemment qu'en parallélépipède et pourra être ainsi conformé par exemple en tronc de pyramide ou bien encore en cube.

L'ouverture pourrait être ménagé dans l'embase et non dans le capot.

Le boitier décodeur selon l'invention pourrait être intégré à une télévision, ou bien être situé dans un appareil offrant d'autres fonctionnalités (par exemple une console de jeux).

Bien qu'ici le champ de vision du capteur optique soit un champ de vision en tronc de pyramide, le champ de vision pourra être en tronc de cône.

Bien qu'ici le capteur optique soit agencé de sorte que son axe de vision soit incliné vers le haut (i.e. en direction de la face principale supérieure), le capteur optique pourra être agencé de sorte que son axe de vision soit incliné vers le bas (i.e. en direction de la face principale inférieure).

L'angle α pourra avoir une autre valeur que celle indiquée.

Le support pourra être une simple plaque et non une carte à circuits imprimés.

Le support pourra être agencé de manière parallèle (et non incliné comme ce qui a été proposé) vis-à-vis du flanc dans lequel l'ouverture est ménagée, le capteur optique étant alors agencé de sorte que son axe de vision soit incliné (et non orthogonal comme ce qui a été indiqué) vis-à-vis d'une des faces principales du support.

Bien qu'ici les moyens d'ajustement soient inclus dans le boitier, les moyens d'ajustement pourront être externes au boitier. Par exemple un système pourra comporter à la fois le boitier et à la fois un organe distant intégrant les moyens d'ajustement comme par exemple un serveur distant.

Les moyens d'ajustement, qu'ils fassent ou non partie du boitier, pourront réaliser une correction totale ou intermédiaire de la déformation des images selon le ratio correction de la déformation /perte de résolution visée. En effet, la correction de perspective entrainera nécessairement une perte de résolution - plus importante sur la partie subissant la correction la plus importante.

On pourra également n'avoir aucune correction des images.

Le support portant le capteur optique pourra comporter d'autres composants que le capteur optique comme par exemple des moyens de commande d'une interface utilisateur/boitier (et par exemple d'une interface lumineuse), des moyens de détection de signaux provenant d'une télécommande associée au boitier ...

## Revendications

1. Boitier décodeur comportant un caisson (2) comprenant :
- Une première face principale (3),
- Une deuxième face principale (4),
- Au moins un flanc latéral (5) reliant la première face principale à la deuxième face principale,
**caractérisé en ce qu'**il comporte au moins un capteur optique (8) dont le champ de vision (9) est centré autour d'un axe de vision (10) donné, ledit axe de vision étant incliné vis-à-vis d'un plan donné horizontal lorsque le boitier est en service posé
sur une base, le flanc étant pourvu d'au moins une ouverture (11) traversant le flanc de sorte à déboucher à une première extrémité hors du caisson et à une deuxième extrémité à l'intérieur du caisson, le capteur optique étant agencé dans le caisson de sorte que ledit axe de vision traverse le flanc via ladite ouverture,
dans lequel le caisson (2) est au moins en deux parties, le caisson comportant une embase (6) et un capot (7) formant conjointement le caisson,
le boitier comprenant un support (12) portant le capteur optique (8), le capteur optique étant ainsi fixé au support, le support (12) étant une carte à circuits imprimés,
le support étant fixé au capot au niveau d'une face principale supérieure du caisson, le capteur optique étant agencé en partie haute du boitier, le capteur optique étant entièrement agencé à l'intérieur du caisson.

2. Boitier selon la revendication 1, dans lequel l'ouverture (11) s'étend longitudinalement le long d'une direction donnée (A), le capteur optique (8) étant agencé de sorte que l'axe de vision soit parallèle à ladite direction donnée.

3. Boitier selon l'une des revendications précédentes, dans lequel le capteur optique (8) est agencé de sorte que l'axe de vision (10) soit incliné relativement au flanc latéral (5).

4. Boitier selon l'une des revendications précédentes, dans lequel le capteur optique (8) est agencé de sorte que le plan donné est parallèle à au moins l'une des faces principales du caisson (2).

5. Boitier selon l'une des revendications précédentes, dans lequel le capteur optique (8) est agencé de sorte que son axe de vision (10) soit incliné vers le haut.

6. Boitier selon l'une des revendications précédentes, dans lequel le capteur optique (8) est agencé de sorte que son axe de vision (10) forme un angle donné avec un axe du plan selon lequel s'étend l'une des faces principales du caisson (2), ledit angle étant compris entre 3 et 13 degrés.

7. Boitier selon l'une des revendications précédentes, dans lequel le capteur optique (8) est agencé sur le support (12) de sorte que son axe de vision (10) soit perpendiculaire à une face principale du support.

8. Boitier selon l'une des revendications précédentes, dans lequel le support (12) est monté sur le caisson (2) de manière inclinée vis-à-vis du flanc latéral.

9. Boitier selon l'une des revendications 1 à 8, comprenant au moins une protection.

10. Boitier selon la revendication 9, dans lequel la protection (16) recouvre une extrémité de l'ouverture (11) débouchant à l'extérieur du caisson (2).

11. Boitier selon la revendication 9 ou la revendication 10, dans lequel la protection (16) est agencée de sorte à former un plan continu avec le flanc latéral (5).

12. Boitier selon l'une des revendications 9 à 11, dans lequel la protection (16) est agencée entre une face interne du caisson (2) et le capteur optique (8).

13. Boitier selon l'une des revendications précédentes, dans lequel l'ouverture (11) est conformée au moins en partie en tronc de cône.

14. Système comprenant un boitier selon l'une des revendications précédentes et des moyens d'ajustement des images acquises par le capteur optique.

## Patentansprüche

1. Decoderbox mit einem Korpus (2), welcher umfasst:
- eine erste Hauptseite (3),
- eine zweite Hauptseite (4),
- zumindest eine die erste Hauptseite mit der zweiten Hauptseite verbindende Seitenwand (5);
**dadurch gekennzeichnet, dass** sie zumindest einen optischen Sensor (8) mit einem um eine gegebenen Sichtachse (10) zentrierten Sichtfeld (9) enthält, wobei die Sichtachse in Bezug auf eine horizontale Ebene geneigt ist, wenn sich die Decoderbox auf einer Basisfläche stehend in Betrieb befindet, wobei die Seitenwand mit zumindest einer Öffnung (11) versehen ist, welche sich derart durch die Seitenwand hindurch erstreckt, dass sie an einem ersten Ende an der Korpusaußenseite und an einem zweiten Ende an der Korpusinnenseite mündet, wobei der optische Sensor derart in dem Korpus angeordnet ist, dass die Sichtachse über besagte Öffnung durch die Seitenwand hindurch verläuft,
wobei der Korpus (2) zumindest aus zwei Teilen besteht, wobei der Korpus eine Grundplatte (6) und eine Abdeckung (7) enthält, die gemeinsam den Korpus bilden,
wobei die Decoderbox einen den optischen Sensor (8) tragenden Träger (12) umfasst, wobei der optische Sensor somit an dem Träger (12) befestigt ist, wobei es sich bei dem Träger (12) um eine gedruckte Leiterplatte handelt, wobei der Träger im Bereich einer oberen Hauptseite des Korpus an der Abdeckung befestigt ist, wobei der optische Sensor in dem oberen Teil der Decoderbox angeordnet ist, wobei der optische Sensor zur Gänze im Inneren des Korpus angeordnet ist.

2. Decoderbox nach Anspruch 1, wobei sich die Öffnung (11) longitudinal entlang einer gegebenen Richtung (A) erstreckt, wobei der optische Sensor (8) derart angeordnet ist, dass die Sichtachse parallel zu besagter gegebener Richtung verläuft.

3. Decoderbox nach einem der vorhergehenden Ansprüche, wobei der optische Sensor (8) derart angeordnet ist, dass die Sichtachse (10) in Bezug auf die Seitenwand (5) geneigt ist.

4. Decoderbox nach einem der vorhergehenden Ansprüche, wobei der optische Sensor (8) derart angeordnet ist, dass die gegebene Ebene parallel zu zumindest einer der Hauptseiten des Korpus (2) verläuft.

5. Decoderbox nach einem der vorhergehenden Ansprüche, wobei der optische Sensor (8) derart angeordnet ist, dass seine Sichtachse (10) nach oben hin geneigt ist.

6. Decoderbox nach einem der vorhergehenden Ansprüche, wobei der optische Sensor (8) derart angeordnet ist, dass seine Sichtachse (10) einen gegebenen Winkel mit einer Achse der Ebene bildet, entlang derer sich eine der Hauptseiten des Korpus (2) erstreckt, wobei der Winkel zwischen 3 und 13 Grad beträgt.

7. Decoderbox nach einem der vorhergehenden Ansprüche, wobei der optische Sensor (8) derart auf dem Träger (12) angeordnet ist, dass seine Sichtachse (10) senkrecht zu einer Hauptfläche des Trägers verläuft.

8. Decoderbox nach einem der vorhergehenden Ansprüche, wobei der Träger (12) an dem Korpus (2) in Bezug auf die Seitenwand geneigt montiert ist.

9. Decoderbox nach einem der Ansprüche 1 bis 8, umfassend zumindest eine Schutzabdeckung.

10. Decoderbox nach Anspruch 9, wobei die Schutzabdeckung (16) ein Ende der von dem Korpus (2) nach Außen mündenden Öffnung (11) abdeckt.

11. Decoderbox nach Anspruch 9 oder nach Anspruch 10, wobei die Schutzabdeckung (16) derart angeordnet ist, dass sie eine durchgehende Ebene mit der Seitenwand (5) bildet.

12. Decoderbox nach einem der Ansprüche 9 bis 11, wobei die Schutzabdeckung (16) zwischen einer Innenfläche des Korpus (2) und dem optischen Sensor (8) angeordnet ist.

13. Decoderbox nach einem der vorhergehenden Ansprüche, wobei die Öffnung (11) zumindest teilweise kegelstumpfförmig ausgebildet ist.

14. System, umfassend eine Decoderbox nach einem der vorhergehenden Ansprüche und Bildanpassungsmittel zur Anpassung der von dem optischen Sensor erfassten Bilder.

## Claims

1. Set-top box comprising a housing (2) comprising:
a first main face (3),
a second main face (4),
at least one lateral flank (5) connecting the first main face to the second main face,
**characterized in that** the set-top box comprises at least one optical sensor (8) the field of vision (9) of which is centred around a given line of vision (10), said line of vision being inclined vis-à-vis a given horizontal plane, when the set-top box is in service placed on a base, the flank being provided with at least one opening (11) passing through the flank, so as to lead to a first end outside of the housing and to a second end inside the housing, the optical sensor being arranged in the housing, such that said line of vision passes through the flank via said opening,
wherein the housing (2) is at least made of two parts, the housing comprising a base (6) and a cover (7) jointly forming the housing,
the set-top box comprising a support (12) carrying the optical sensor (8), the optical sensor thus being fixed to the support, the support (12) being a printed circuit board,
the support being fixed to the cover at an upper main face of the housing, the optical sensor being arranged at the top part of the set-top box, the optical sensor being fully arranged inside the housing.

2. The set-top box according to claim 1, wherein the opening (11) extends longitudinally along a given direction (A), the optical sensor (8) being arranged, such that the line of vision is parallel to said given direction.

3. The set-top box according to any one of preceding claims, wherein the optical sensor (8) is arranged, such that the line of vision (10) is inclined relative to the lateral flank (5).

4. The set-top box according to any one of preceding claims, wherein the optical sensor (8) is arranged, such that the given plane is parallel to at least one of the main faces of the housing (2).

5. The set-top box according to any one of preceding claims, wherein the optical sensor (8) is arranged, such that its line of vision (10) is inclined upwards.

6. The set-top box according to any one of preceding claims, wherein the optical sensor (8) is arranged, such that its line of vision (10) forms a given angle with an axis of the plane along which one of the main faces of the housing (2) extends, said angle being between 3 and 13 degrees.

7. The set-top box according to any one of preceding claims, wherein the optical sensor (8) is arranged on the support (12), such that its line of vision (10) is perpendicular to a main face of the support.

8. The set-top box according to any one of preceding claims, wherein the support (12) is mounted on the housing (2) in an inclined manner vis-à-vis the lateral flank.

9. The set-top box according to any one of claims 1 to 8, comprising at least one protection.

10. The set-top box according to claim 9, wherein the protection (16) covers an end of the opening (11) leading outside the housing (2).

11. The set-top box according to claim 9 or claim 10, wherein the protection (16) is arranged so as to form a continuous plane with the lateral flank (5).

12. The set-top box according to any one of claims 9 to 11, wherein the protection (16) is arranged between an internal face of the housing (2) and the optical sensor (8).

13. The set-top box according to any one of preceding claims, wherein the opening (11) is shaped at least partially with a frustoconical shape.

14. A system comprising a set-top box according to any one of preceding claims, and means for adjusting the images acquired by the optical sensor.
